# EUROPÄISCHE PATENTSCHRIFT

(11) **EP 1 061 796 B1**
(45) Veröffentlichungstag und Bekanntmachung des Hinweises auf die Patenterteilung: **26.11.2003**
(21) Anmeldenummer: 99919053.1
(22) Anmeldetag: 08.03.1999
(51) Int. Cl.: A01K 15/02

(54) **VERFAHREN UND VORRICHTUNG ZUR PRÜFUNG, FÖRDERUNG UND NUTZUNG DER SENSORISCHEN DIFFERENZIERUNGS- UND LERNFÄHIGKEIT VON TIEREN**
METHOD AND DEVICE FOR TESTING, PROMOTING AND EXPLOITING THE SENSORY DIFFERENTIATION AND LEARNING ABILITY OF ANIMALS
PROCEDE ET DISPOSITIF PERMETTANT DE VERIFIER, DE FAVORISER ET D'UTILISER LA CAPACITE SENSORIELLE DE DIFFERENCIATION ET D'APPRENTISSAGE DES ANIMAUX

(30) Priorität: 11.03.1998 DE 19810444
(43) Veröffentlichungstag der Anmeldung: 27.12.2000
(73) Patentinhaber: Franz, Folker, 18196 Dummerstorf (DE); Franz, Eike, 18196 Dummerstorf (DE); Franz, Elke, Monmouth Junction, NJ 08852 (US); Rahn, Frauke, 18551 Hagen (DE)
(72) Erfinder: Franz, Folker, 18196 Dummerstorf (DE); Franz, Eike, 18196 Dummerstorf (DE); Franz, Elke, Monmouth Junction, NJ 08852 (US); Rahn, Frauke, 18551 Hagen (DE)
(74) Vertreter: Rother, Bernhard, Dr.-Ing.
(86) Internationale Anmeldenummer: DE9900637
(87) Internationale Veröffentlichungsnummer: WO99045762

(56) Entgegenhaltungen:
- DD-A- 91 146
- DD-A- 274 349
- US-A- 5 392 735
- DATABASE WPI Week 8822, 21. April 1988 (1988-04-21) Derwent Publications Ltd., London, GB; AN 88-150829 XP002113998 & JP 63 091027 A (KAKABEROS)

## Beschreibung

Die Erfindung betrifft ein Verfahren und Vorrichtungen zur Prüfung Förderung und / oder Nutzung der sensorischen Differenzierungs- und Lernfähigkeit von Tieren, entsprechend dem Oberbegriff des Ansprüche 1 und 2. Dabei wird jedes einzelne Tier in seiner gewohnten Umgebung und Lebensweise wiederholt vor Wahlentscheidungen unter Nutzung seiner Bedürfnisse auf Nahrung und Flüssigkeit, seines Reinigungsbedürfnisses, Informationsbedürfnisses, Kontaktbedürfnisses, Behandlungsbedürfnisses, Bewegungsbedürfnisses und Spielbedürfnisses gestellt und erhält jeweils bei einer richtigen Wahlentscheidung eine Belohnung, die der Befriedigung eines der vorgenannten Bedürfnisse dient, während es bei einer falschen Wahlentscheidung keine Belohnung erhält oder einem milden Schreckreiz ausgesetzt wird. Aus der vorzugsweise automatischen Auswertung dieser Wahlentscheidungen werden Rückschlüsse auf die sensorischen Fähigkeiten und die etwaigen Lernfortschritte der einzelnen Tiere gezogen. Dabei wird von der Tatsache ausgegangen, daß die sensorische Differenzierungsfahigkeit und Lernfähigkeit von Tieren, insbesondere von Heimtieren und Nutztieren, durch den Menschen vielfach genutzt wird und somit auch wirtschaftliche und kulturelle Bedeutung besitzt. Es läßt sich diesbezüglich auf die Ausbildung und den Einsatz von Gebrauchshunden, von Sportpferden, von Freizeitpferden und von Vögeln, die Versorgung von Tieren durch Tränkeautomaten, Fütterungsautomaten, Reinigungsautomaten und den Einsatz von Melkautomaten in der Milchwirtschaft verweisen.

Beispiele für die Ausnutzung der psychischen Leistungsfähigkeit von Tieren sind in der Patentliteratur zu finden.
In der DE 43 22 004 C 1 wird eine Selbstfütterungsvorrichtung zur Versorgung von Haustieren, insbesondere Mastschweinen als ein Beispiel für die Ausnutzung der psychischen Leistungsfähigkeit einer Nutztierart vorgeschlagen, bei der das futtersuchende Tier an einer Futteranlage selbstständig ein bewegliches Element bedienen kann, um festsitzendes Futter zu lösen und rieselfähig zu machen.

Ein anderes Beispiel der Nutzung einer Vorrichtung als Hilfe zur Dressur von Tieren, beispielsweise von Hunden und Pferden, ist die Trainingshilfe für Tiere vergl. DE 195 00 520 A 1. Diese Vorrichtung ermöglicht eine laufende reproduzierbare Belohnung und Bestrafung und zwar mittels Verabreichung gutschmeckender oder schlechtschmeckender Geschmacksstoffe. Doch fehlt es hier an einer vorhergehenden Ermittlung der tatsächlichen kognitiven Leistungsfähigkeit der jeweiligen Tiere. Vielmehr begrenzt sich die Aufgabe der Vorrichtung in einer technischen Umsetzung einer reinen Belohnungsvorrichtung und Bestrafungsvorrichtung. Sie führt selbst nicht zu einem Lernerfolg des Tieres, da hierzu immer die Tätigkeit eines Trainers oder Dresseurs notwendig ist.
Das Spielgerät und Dressiergerät, insbesondere für Katzen, bekannt nach DE 43 15 124 A 1 hat zwar nicht das ständige Eingreifen eines Beobachters oder Trainers zur Voraussetzung, es ermöglicht aber auch nicht, wie die vorliegende Erfindung die Feststellung der sensorischen Differenzierungsfähigkeit, Erinnerungsfähigkeit und Lernfähigkeit des Tieres, sondern beschränkt sich auf die Funktion einer mehr zweckfreien Vorrichtung zur Gewährung einer Spielmöglichkeit.

Effektive und bewährte Meßgeräte für die Ermittlung und Bewertung des Lernverhaltens, insbesondere von Heimtieren und Nutztieren sind nicht bekannt geworden. Bei Labortieren wurden dazu bisher besonders drei Apparaturen eingesetzt, nämlich die Skinnerbox, ein Drahtkäfig mit zu bedienenden Hebeln , das Labyrinth in verschiedenster Ausgestaltung sowie Wahlanlagen, in der Regel mit visuellen Signalen. Diese Apparaturen sind für die Prüfung der sensorischen und kognitiven Fähigkeiten von Heimtieren und Nutztieren aus verschiedenen Gründen wenig geeignet. Die Hauptmängel bestehen in der künstlichen Laborsituation und der damit verbundenen ungenügenden Berücksichtigung und Sicherung der natürlichen Lebensbedürfnisse der Tiere, in der eingeschränkten Anpassungsmöglichkeit der mit den Apparaten zu setzenden Lernziele sowie in der unzureichenden Berücksichtigung der individuellen Fähigkeiten der Tiere. Auch lassen sich mit den vorstehenden Apparaturen nur sehr eingeschränkt standardisierte Untersuchungen an Tieren beispielsweise aus einer Gruppe von Heimtieren und Nutztieren, wie etwa von Vögeln, Katzen, Hunden, Pferden, Rindern, Schweinen, Schafen oder Ziegen vornehmen. Hier will die Erfindung Abhilfe schaffen.

Der Erfindung liegt die Aufgabe zugrunde, Verfahren und Vorrichtungen vorzuschlagen, die die Prüfung, Förderung und Nutzung der jeweils interessierenden sensorischen und psychischen Eigenschaften von Tieren, wie etwa des Sehvermögens, des Hörvermögens, des Gefühls, des Geruchsvermögens und Geschmacksvermögens, der Reaktionsweise, der Erinnerungsfähigkeit, der Auffassungsgeschwindigkeit und Auffassungskapazität und der Abstraktionsfähigkeit, für die bisher keine brauchbaren technischen Lösungen vorliegen, ermöglichen.

Erfindungsgemäß wird die Aufgabe für das Verfahren durch die im Patentanspruch 1 dargelegten Merkmale und für die Vorrichtung durch die im Patentanspruch 3 dargelegten Merkmale gelöst. Bevorzugte Weiterbildungen des Verfahrens und der Vorrichtung finden sich in den abhängigen Ansprüchen.

Das erfindungsgemäße Verfahren löst die Aufgabe im einzelnen dadurch, daß das betreffende Tier mehrfach vor Wahlentscheidungen gestellt wird, die richtige (belohnte) oder falsche (nicht belohnte oder mild bestrafte) Wahlentscheidungen des Tieres ermöglichen. Aus einem zunehmenden oder abnehmendem Anteil der Zahl von richtigen Wahlentscheidungen werden Rückschlüsse auf die sensorischen und kognitiven Fähigkeiten des Tieres gezogen. Da das Ziel ist, diese Fähigkeiten einzelner oder mehrerer Tiere im Rahmen ihrer normalen häuslichen, wirtschaftlichen oder anderen Haltung zu nutzen, erfolgt erfindungsgemäß die Wahlentscheidung in der den Tieren gewohnten Umgebung, in ihrem tierspezifischen sozialen Umfeld und bei der Realisierung ihrer natürlichen Bedürfnisse wie beispielsweise Fressen, Trinken, Bewegen, Reinigen, Erkunden, Spielen und Ruhen, um vor allem Verfälschungen der Ergebnisse aufgrund einer künstlichen Untersuchungssituation zu vermeiden. Dieses Verfahren gibt zudem die Möglichkeit, alle Tiere einzeln, in einer Gruppe oder in einer Herde in standardisierter Form zu prüfen und je nach kognitiver Leistungsfähigkeit einzuordnen.

Verfahrensmäßig bevorzugt wird eine Wahlentscheidung seitens des zu prüfenden Tieres durch Berühren, Bewegen, Betätigen und Annähern an Wahlvorrichtungen **(4)** ohne weitere Hilfsmittel und unter Ausschluss der Beeinflussung durch andere Tiere vorgenommen, wobei diesen Wahlentscheidungen zeitlich und räumlich Signale, die vorwiegend von Vorrichtungen **(2, 7, 8, 9)** abgegeben werden, dergestalt vorgeschaltet sind, dass das einzelne Tier eine Wahlentscheidung erst bei Auftreten und unter Berücksichtigung des Signals ausüben kann, wobei statt nur eines Signals auch mehrere gleichartige oder auch unterschiedliche Signalarten zur Wahlvoraussetzung gemacht werden können.
Vorzugsweise bestehen die Signale in schwarz - weißen oder farbigen Flächen, Symbolen oder Bildern, in Geräuschen, Tönen oder Tonfolgen, in Temperaturreizen, in spezifischen olfaktorischen Reizen (Geruch, Geschmack) oder in spezifischen taktilen Reizen.

Die Belohnung des Tieres bei einer richtigen Wahlentscheidung erfolgt bevorzugt durch Gewährung von Futter **(5, 6)** und Tränke **(5.1, 6.1)**, in der Gewährung von Wärme, etwa mittels eines Wärmestrahlers **(9)**, in der Gewährung angenehmer taktiler Reize, in angenehmen Geräuschen oder Tonfolgen **(7)**, in der Darstellung stehender oder bewegter Bilder **(2)**, in der Gewährung olfaktorischer Reize (Geruch, Geschmack) und im Angebot besonderer Spielmöglichkeiten, Kontaktmöglichkeiten, Reinigungsmöglichkeiten, Behandlungsmöglichkeiten, Bewegungsmöglichkeiten oder Auslaufmöglichkeiten **(3)**.

Es können dem Tier für die Wahlentscheidung erfindungsgemäß auch unterschiedliche Belohnungsarten zur freien Entscheidung angeboten werden. Aus der Häufigkeit der Entscheidung für bestimmte Belohnungen lassen sich wiederum Rückschlüsse auf Bedürfnisse ableiten, die über die Grundbedürfnisse hinausgehen oder ganz individuelle Interessen oder Bedürfnisse darstellen.

Um die Aufmerksamkeit des Tieres zu erhöhen und den durch die Wahlentscheidungen erwarteten Lerneffekt zu verstärken, ist verfahrensgemäß vorgesehen, dass das Tier bei einer falschen Wahlentscheidung eine entsprechende Information, beispielsweise in Form eines bestimmten, möglicherweise unangenehmen Geräusches **(7)** oder Lichtimpulses **(2)**, erhält oder einem tierspezifischen milden Schreckreiz ausgesetzt wird, beispielsweise in Form eines Luftstrahls, Gasstrahls oder Wasserstrahls , eines bestimmten Lichteffektes **(2),** eines taktilen oder geeigneten anderen Reizes **(8, 9).**

Die Signalvorrichtungen **(2, 7, 8, 9),** die Vorrichtungen **(4 )** für die Wahlentscheidungen, die zentral und dezentral angeordnet und unterschiedlich ausgestaltet werden, sowie die Vorrichtungen **(3, 5, 5.1, 6, 6.1, 8, 9)** für die Gewährung von Belohnungen befinden sich zweckmäßigerweise stirnseitig in einer dem Tier bekannten und auch sonst etwa zum Fressen, Trinken oder Ruhen regelmäßig aufgesuchten Haltungsbox oder Einzeltierstand **(10),** so dass das Tier die Signalvorrichtungen **(2, 7, 8, 9),** sowie die Wahlvorrichtungen **(4 )** und Belohnungsvorrichtungen **(3, 5, 5.1, 6, 6.1, 8, 9)** vor sich zu erkennen vermag, wobei die Haltungsbox oder Einzeltierstand **(10)** jeweils nur von einem Tier betreten und die Untersuchung ohne Einflussnahme und Beeinträchtigung durch andere Tiere durchgeführt werden kann, während die den Schreckreiz hervorrufende Anlagen **(2, 7, 8, 9)** nicht im Sichtfeld des Tieres installiert zu sein brauchen.

Um das einzelne Tier, das in einer Haltungsbox oder Einzeltierstand **(10)** eine Wahlentscheidung vornimmt, auch innerhalb seiner Gruppe oder Herde individuell erkennen zu können, sind die zu untersuchenden Tiere im Falle der Gruppenhaltung oder Herdenhaltung und die Haltungsbox oder Einzeltierstand **(10)** bevorzugt mit einem an sich bekannten automatischen computergestützten Tieridentifizierungssystem und Herdenmanagementsystem **(11)** verbunden.

Die Steuerung der Signalabgabe an den Signalvorrichtungen **(2, 7, 8, 9),** die Erkennung der anschließenden Wahlentscheidungen eines die Haltungsbox oder Einzeltierstand **(10)** aufsuchenden Tieres, die Gewährung von Belohnungen **(3, 5, 5.1, 6, 6.1, 8, 9)** oder die Abgabe von Bestätigungssignalen und milden Schreckreizen durch die jeweiligen Vorrichtungen **(2, 7, 8, 9)** sollten bevorzugt automatisch durch eine Auswertungsanlage und Steuerungsanlage **(1)** vorgenommen werden.
Sinnvollerweise werden die Tierdaten des Tieridentifizierungssystems und Herdenmanagementsystems **(11)** mit den Daten der Auswertungsanlage uns Steuerungsanlage **(1)** zur Signalabgabe, den Wahlentscheidungen, der Gewährung von Belohnung und der Abgabe von Bestätigungssignalen oder milden Schreckreizen durch ein Computerprogramm verbunden, das diese über einen längeren Zeitraum gewonnenen Daten dem jeweiligen Tier individuell zuordnet und daraus Ergebnisse zur Differenzierungsfähigkeit und Lernfähigkeit des Tieres ableitet.

Die bei Einzelhaltung oder bei Gruppenhaltung von Tieren über einen bestimmten Zeitraum automatisch gesammelten und nach bestimmten Algorithmen aufbereiteten Daten werden verfahrensmäßig auch so genutzt, dass der Schwierigkeitsgrad für folgende Wahlentscheidungen in Abhängigkeit vom bisherigen Erfolg des Tieres festgelegt und dadurch ein den individuellen Fähigkeiten entsprechend unterschiedliches Lernergebnis erzielt werden kann.

Auf der Basis der über einen bestimmten Zeitraum automatisch gesammelten und nach entsprechenden Algorithmen ausgewerteten Daten können erfindungsgemäß die folgenden Wahlentscheidungen auch so gestaltet werden, dass das getestete Tier zu einem vorgegebenen Differenzierungsergebnis und Lernergebnis gelangt, wobei die Steuerung der Auswahl bevorzugt durch das Computerprogramm erfolgt.

Der Vorteil des vorstehend beschriebenen Verfahrens besteht in der Möglichkeit, aufgrund der großen Variationsbreite der einer Wahlentscheidung zugrunde liegenden Signale aus allen sensorischen Empfindungsbereichen der jeweiligen Tierart die unterschiedlichen kognitiven Fähigkeiten zu ermitteln, gegebenenfalls durch spezifisch angepasste Wahlentscheidungen zu erweitern und bei den Tieren im Rahmen ihrer genetischen Möglichkeiten ein vorgegebenes Differenzierungsziel und Lernziel auch unter dem Gesichtspunkt einer wirtschaftlichen Nutzung zu erreichen.

Ein weiterer Vorteil der Erfindung besteht darin, dass durch ein in die Tests einbezogenes computergesteuertes Tieridentifizierungssystem und Herdenmanagementsystem sich die aus den Wahlentscheidungen der Tiere gewonnenen Daten automatisch über einen längeren Zeitraum jedem Tier aus einer größeren Gruppe oder Herde individuell zuordnen lassen, so dass die insoweit leistungsfähigsten Tiere zum günstigsten Zeitpunkt für spezielle Aufgaben herausgefunden oder für besondere Zuchtmaßnahmen zusammengestellt werden können.

Die gleichfalls große Variationsbreite bei den möglichen Belohnungsformen ergibt erfindungsgemäß Möglichkeiten zur Ermittlung von tierartspezifischen oder tierspezifischen Bedürfnissen, die über die bekannten Grundbedürfnisse hinausgehen. Das beschriebene Verfahren gestattet eine Einschätzung, wie stark diese spezifischen Bedürfnisse ausgeprägt sind und welche Formen der Befriedigung am geeignetsten sind und wie diese Bedürfnisse in verschiedene Beschäftigungsprogramme zweckmäßig zu integrieren sind.

Eine Vorrichtung ist im folgenden anhand des in den Figuren dargestellten Ausführungsbeispiels näher erläutert. Es zeigen:

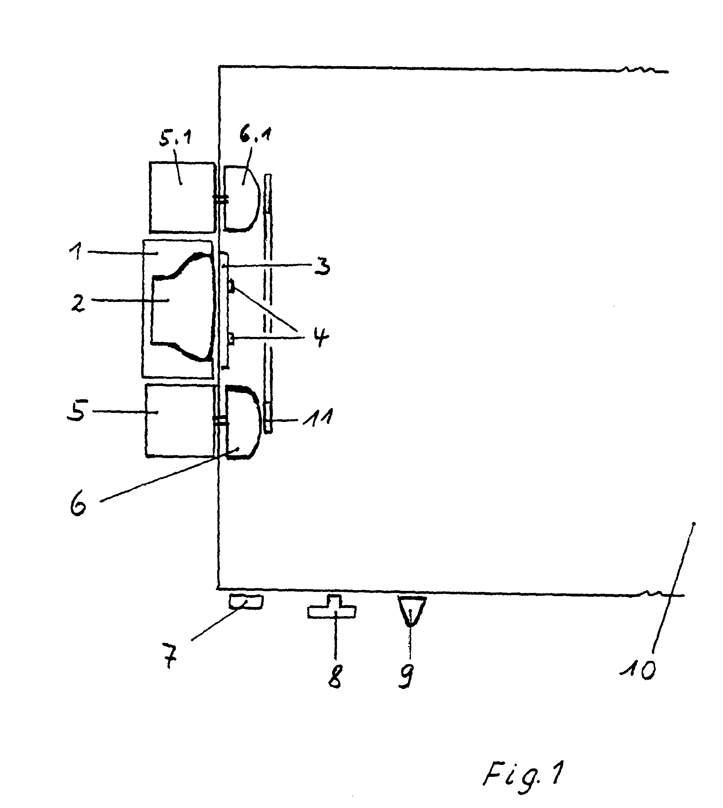

**Fig. 1:** ein Ausführungsbeispiel eines Lernautomaten und Beschäftigungsautomaten im Grundriss, schematisch

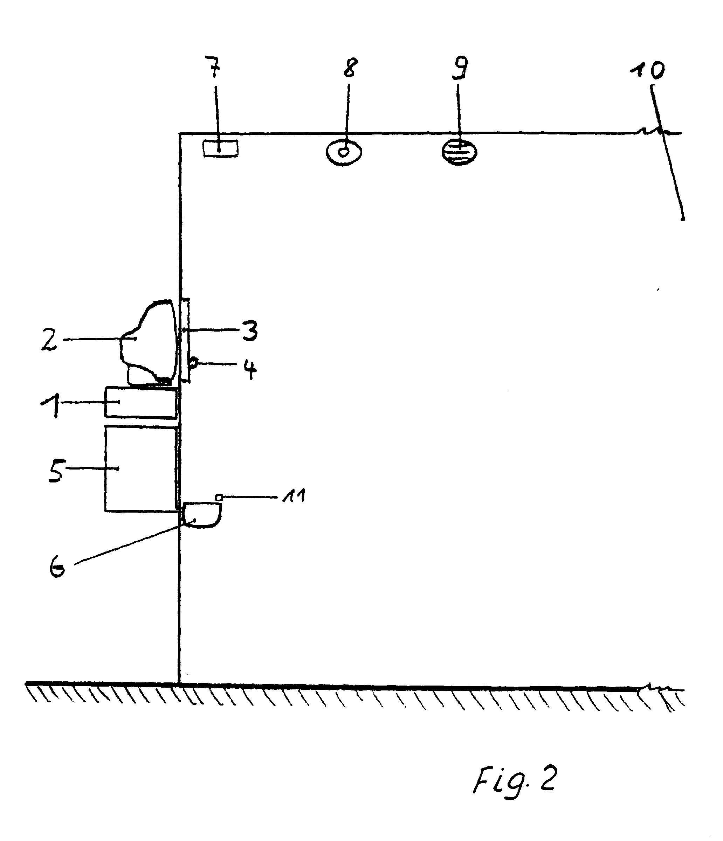

**Fig. 2:** eine Seitenansicht zu Fig. 1, schematisch

Der Lernautomat und Beschäftigungsautomat für Tiere wird an einer durchaus bekannten Haltungsbox oder Einzeltierstand **(10)** installiert, deren Abmessungen bei Einzelhaltung der jeweiligen Tierart entsprechend beliebig gewählt werden können. Bei Gruppenhaltung werden ihre Abmessungen so gewählt, dass nur ein Tier sich in der Haltungsbox oder Einzeltierstand **(10)** ungestört aufhalten kann.
Der Lernautomat und Beschäftigungsautomat besteht beispielsweise aus einer Auswertungsanlage und Steuerungsanlage **(1)**, dem dazugehörigen Monitor oder bildgebenden Gerät **(2)**, einer Zu- und Ausgangsvorrichtung **(3)**, einer oder mehreren zentralen oder dezentralen Wahlvorrichtungen **(4),** einem oder mehreren Futterdosierem **(5),** einem oder mehreren Wasserspendern und Flüssigkeitsspendern **(5.1),** den dazugehörigen Futtertrögen **(6)** und Tränktrögen **(6.1),** einem oder mehreren Lautsprechern **(7),** einem oder mehreren Ventilatoren **(8),** einem oder mehreren Wärmestrahlern **(9),** bei Gruppenhaltung aus einer oder mehreren Antennen eines durchaus bekannten Tieridentifizierungssystems und Herdenmanagementsystems **(11)** mit den am Tier befindlichen Respondern oder Transspondern, aus einer oder mehreren Signalvorrichtungen zur Abgabe von festen, gasförmigen, flüssigen, visuellen, akustischen, taktilen und olfaktorischen Signalen sowie einem Duftspendegerät und Duftspeicher.

### Bezugszeichenliste

- **1**: Auswertungsanlage und Steuerungsanlage
- **2**: Monitor oder bildgebendes Gerät
- **3**: Zu- und Ausgangsvorrichtung
- **4**: Wahlvorrichtungen
- **5**: Futterdosierer
- **5.1**: Wasser- oder Flüssigkeitsspender
- **6**: Futtertrog
- **6.1**: Tränketrog
- **7**: Lautsprecher
- **8**: Ventilator
- **9**: Wärmestrahler
- **10**: Haltungsbox oder Einzeltierstand
- **11**: Antenne und Transponder / Responder eines Tieridentifizierungssystems und Herdenmanagementsystems

## Patentansprüche

1. Verfahren zur Prüfung, Förderung und Nutzung der sensorischen Differenzierungs- und Lernfähigkeit von Tieren, **dadurch gekennzeichnet, dass** Vorrichtungen eingesetzt werden, deren Signale durch das Tier aufgenommen werden, diese Signale das Tier zu Wahlentscheidungen führen, die hierzu erfolgende Auswertung zur Belohnung bei Richtigwahl durch Erfüllung von psychischen und/oder physischen Bedürfnissen der Tiere führt und bei Falschwahl ein milder Schreckreiz zur Erhöhung der Aufmerksamkeit und der Erinnerungsfähigkeit erfolgt und das die sensorische Differenzierungsund Lemfähigkeit des Tieres über einen längeren Zeitraum automatisch festgestellt wird.

2. Verfahren nach Anspruch 1, **dadurch gekennzeichnet, dass** die Wahlentscheidungen zur Bedürfnisbefriedigung in einem Tierstand in der Umgebung erfolgen, in der das Tier üblicherweise lebt, wobei das Tier, das entweder als Einzeltier, in einer kleinen Tiergruppe oder großen Herde gehalten wird, den Zeitpunkt und die Anzahl der Wahlentscheidungen im Tierstand selbst bestimmen kann und das die Wahlentscheidung durch Betätigung einer mit dem jeweiligen Signal in erkennbarer Beziehung stehenden Vorrichtung erfolgt, die von dem Tier ohne weitere Hilfsmittel durch Berühren, Bewegen oder Annähern vorgenommen werden kann und die zudem gegen eine gleichzeitige Beeinflussung durch andere Tiere gesichert ist.

3. Vorrichtung zur Durchführung des Verfahrens nach Anspruch 1, **dadurch gekennzeichnet, dass** in einem Tierstand, in dem zumindest eine Signalvorrichtung (2, 7, 8, 9), wenigstens eine Wahlvorrichtung (4), sowie zumindest eine Vorrichtung (3, 5, 5.1, 6, 6.1, 8, 9) für die Gewährung von Belohnung und die Abgabe eines milden Schreckreizes angebracht ist und die Steuerung der Signalabgabe an zumindest einer Signalvorrichtung (2, 7, 8, 9), die Auswertung der anschließenden Wahlentscheidung des Tieres sowie der gegebenen Belohnung und des milden Schreckreizes automatisch durch eine Auswertungsanlage und Steuerungsanlage (1) erfolgt, wobei diese über einen längeren Zeitraum die Daten sammelt und hieraus die Ergebnisse zur Differenzierungsfähigkeit und Lernfähigkeit ableitet und zur Steuerung wieder einsetzt.

4. Vorrichtung nach Anspruch 3, **dadurch gekennzeichnet, dass** der Tierstand eine Haltungsbox (10) ist, an der verschiedene Signalvorrichtungen (2, 7, 8, 9) zur Auslösung sensorischer Reize beim Tier angeordnet sind, dass das einzelne Tier nach dem Betreten der Einzelbox das Signalgerät und die dazugehörige Vorrichtung für die Wahlentscheidung erkennen kann und nicht durch andere Tiere bei der Betätigung behindert wird.

5. Vorrichtung nach Anspruch 3, **dadurch gekennzeichnet, dass** die Signalvorrichtung (2, 7, 8, 9) feste, flüssige, gasförmige, visuelle, akustische, taktile und olfaktorische Signale abgibt.

6. Vorrichtung nach Anspruch 3, **dadurch gekennzeichnet, dass** die Wahlvorrichtung (4) als Schalter, Drucksensor, Näherungssensor, Hebel oder Lichtschranke ausgebildet ist.

7. Vorrichtung nach Anspruch 3, **dadurch gekennzeichnet, dass** ein zusätzliches signalgebendes Tieridentifizierungssystem und Herdenmanagementsystem (11 ) eingesetzt wird.

8. Vorrichtung nach Anspruch 3, **dadurch gekennzeichnet, dass** die Belohnung außer in der Futter- und Tränkedarbietung in verschiedenen Reizen besteht, beispielsweise in der Darstellung stehender oder bewegter Bilder, Geräuschen, Tonfolgen, in angenehmen Wärmestrahlen oder angenehmen taktilen oder olfaktorischen Reizen, wobei alle Kombinationsmöglichkeiten eingeschlossen sind und dass zumindest eine Zugangs- und Ausgangsvorrichtung (3) von und zur Haltungsbox oder Einzeltierstand (10) zu gesonderten Plätzen mit speziellen Handlungsmöglichkeiten und Behandlungsmöglichkeiten angebracht ist.

## Claims

1. A method for testing, promoting and exploiting the sensory differentiation and learning ability of animals,
**characterized in that** devices are used, the signals of which are received by the animal, wherein said signals are guiding said animal to decisions of choice, the evaluation occurring with this results in rewarding for a correct choice by satisfying psychological and/ or physical needs of the animals, and a mild fright stimulus is carried out for an incorrect choice to increase the attention and memory, and **in that** said sensory differentiation and learning ability of said animal is automatically detected over a longer period.

2. A method according to claim 1,
**characterized in that** said decisions of choice for satisfying needs are carried out in an animal pen in the environment where said animal is usually living, wherein said animal that is kept either as an individual animal, in a small group of animals or in a great herd, is able to determine itself the instant and the number of decisions of choice in said animal pen, and **in that** said decision of choice is achieved by actuating a device being in a recognizable relation with said respective signal, and which can be carried out by said animal by touching, moving or approaching without any utilities and which moreover is ensured against a simultaneous influence caused by other animals.

3. A device for performing said method according to claim 1,
**characterized in that** in an animal pen in which at least one signal means (2, 7, 8, 9), at least one selector (4) as well as at least one means (3, 5, 5.1, 6, 6.1, 8, 9) for granting said rewarding and the output of a mild fright stimulus are arranged, and controlling of signal output toward at least said signal means (2, 7, 8, 9), the evaluation of the subsequent animal's decision of choice as well as the given rewarding and said mild fright stimulus are achieved automatically by means of a evaluation and control equipment (1) wherein said one collects data over a longer period and derives the results therefrom for differentiation and learning ability, and reuses them for control.

4. A device according to claim 3,
**characterized in that** said animal pen is an animal keeping box (10) on which different signal means (2, 7, 8, 9) are arranged to initiate sensory stimuli in the animal, **in that** said individual animal after entering said single box is able to recognize said signal means and said associated device for the decision of choice, and will not be hindered by other animals during the actuation.

5. A device according to claim 3,
**characterized in that** said signal means (2, 7, 8, 9) outputs solid, liquid, gaseous, visual, acoustic, tactile and olfactory signals.

6. A device according to claim 3,
**characterized in that** said selector (4) is formed as a switch, pressure sensor, proximity sensor, lever or light barrier.

7. A device according to claim 3,
**characterized in that** an additional signalling animal identification and herd management system (11 ) is used.

8. A device according to claim 3,
**characterized in that**, apart from food and watering, said rewarding consists of different stimuli, for example, in the representation of still images or moving images, noises, sequences of notes, in agreeable heat rays or agreeable tactile or olfactory stimuli, wherein all possibilities of combination are involved, and **in that** at least one entrance and exit means (3) from and toward said animal keeping box or single animal pen (10) to particular locations with special handling and treatment facilities is arranged.

## Revendications

1. Procédé permettant de vérifier, d'activer et d'exploiter la capacité sensorielle de différenciation et d'apprentissage des animaux, **caractérisé par** l'emploi des dispositifs dont les signaux sont saisis par l'animal et le mènent à son choix, l'interprétation des données entraînant, en cas de bon choix, une récompense en satisfaisant les besoins psychiques et physiques tandis qu'en cas de mauvais choix un stimulus léger est exercé afin d'augmenter l'attention et la mémoire de l'animal, la capacité sensorielle de différenciation et d'apprentissage de l'animal étant déterminée automatiquement pendant une longue période.

2. Procédé selon la revendication 1, **caractérisé en ce que** ledit choix se passe dans une box dans le milieu habituel de l'animal, ce dernier-détenu seul, en groupe ou en troupeau- étant libre en ce qui concerne le moment et le nombre de ses décisions, et ledit choix étant fait en actionnant un dispositif relié au signal actuel, soit en touchant, en bougeant ou en s'approchant sans aide, tout en étant protégé contre une influence simultanée d'autres animaux.

3. Dispositif pour la réalisation du procédé selon la revendication 1, **caractérisé en ce que** dans le box se trouvent au moins un dispositif de signalisation (2, 7, 8, 9), un dispositif de choix (4) et un dispositif de récompense ou de stimulation légère (3, 5, 5.1, 6, 6.1, 8, 9),**en ce que** la commande des signaux se fait par au moins un dispositif de signalisation (2, 7, 8, 9) et **en ce que** l'interprétation de la décision de l'animal, de la récompense et du stimulus léger se produit automatiquement par un dispositif d'interprétation et un dispositif de contrôle (1) qui, pendant une longue période, sauvegarde les données afin d'en déduire des conclusions concernant la capacité sensorielle de différenciation et d'apprentissage et de les réutiliser pour la commande.

4. Dispositif selon la revendication 3, caractérisé en que le box est une stalle (10), dotée de divers dispositifs de signalisation (2,7,8,9) pour provoquer des irritations sensorielles sur l'animal qui doit pouvoir reconnaître, après être entré dans la stalle individuelle, lesdits dispositifs de signalisation et de choix sans que la mise en marche de ces derniers soit influencée par d'autres animaux.

5. Dispositif selon la revendication 3, **caractérisé en ce que** ledit dispositif de signalisation (2, 7, 8, 9) produit des signaux solides, liquides, gazeux, visuels, acoustiques, tactiles et olfactifs.

6. Dispositif selon la revendication 3, **caractérisé en ce que** le dispositif de choix (4) est construit en forme d'interrupteur, de touche à effleurement, de capteur d'approche, de levier ou de barrage optique.

7. Dispositif selon la revendication 3, **caractérisé en ce qu'**un système supplémentaire d'identification d'animaux et un système de gestion de troupeaux (11) est utilisé.

8. Dispositif selon la revendication 3, **caractérisé en ce que** la récompense consiste non seulement en de l'alimentation de l'abreuvage mais en une excitation des sens, par exemple la présentation des images fixes ou animées, des bruits, des suites de sons, l'émission de chaleur agréable ou bien des stimulus tactiles ou olfactifs, toutes les combinaisons possibles y inclus, tandis que la travail ou la stalle individuelle (10) doit présenter au moins un dispositif d'accès et de sortie (3) qui mène à des endroits séparés prévus pour un traitement.
